# EUROPEAN PATENT SPECIFICATION

(11) **EP 1 939 473 B1**
(45) Date of publication and mention of the grant of the patent: **23.05.2018**
(21) Application number: 06466021.0
(22) Date of filing: 29.12.2006
(51) Int. Cl.: F16C 32/04, H02K 7/09, D01H 4/14

(54) **The method of leviation, centering, stabilization and driving of electromagnetic functional part of radial electromagnetic bearing and electrical ratation drive, electromagnetic bearing and driving system and spinning mechnism of rotor spinning machine**
Verfahren für Levitation, Zentrierung, Stabilisierung und Antrieb eines elektromagnetischen funktionellen Teils eines elektromagnetischen Radiallagers und elektrischer Rotationsantrieb, elektromagnetisches Lager und Antriebssystem sowie Spinnmechanismus einer Rotorspinnmaschine
Procédé de levage, centrage, stabilisation et commande d'une pièce fonctionnelle électromagnétique d'un support électromagnétique radial et commande de rotation électrique, support électromagnétique et système de commande, et mécanisme de filature d'une machine à lancement de rotor

(43) Date of publication of application: 02.07.2008
(73) Proprietor: Rieter CZ s.r.o., 562 01 Ústí nad Orlicí (CZ)
(72) Inventor: Silber, Siegfried, 4202 Kirchschlag (AT); Amrhein, Wolfgang, 4100 Ottensheim (AT); Sloupensky, Jiri, 562 01 Usti nad Orlici (CZ)
(74) Representative: Musil, Dobroslav

(56) References cited:
- WO-A-99/11848
- DE-A1- 4 104 250
- DE-U- 7 342 874
- FR-A- 2 729 722
- JP-A- 9 247 897
- US-A- 4 285 553
- US-A- 4 652 780
- US-A- 4 841 204
- US-A- 5 208 522
- US-A- 5 982 065
- US-B1- 6 268 674

## Description

### Technical field

The invention relates to the method of levitation, centering, stabilization and driving of an electromagnetic functional part of radial electromagnetic bearing and electrical rotation drive, which moves and rotates with respect to a stator of radial electromagnetic bearing and a stator of electrical rotation drive through acting of components of magnetic flux, which based on monitoring the position and/or speed and/or acceleration of rotation of electromagnetic functional part of electric machine induce forces acting upon electromagnetic functional part of electric machine in axial and/or radial and/or tangential direction wherein stabilizing magnetic flux and driving magnetic flux from separate sources of the magnetic flux simultaneously acts on the electromagnetic functional part of radial electromagnetic bearing and electrical rotation drive, wherein the stabilizing magnetic flux comprises a permanent component excited by a stabilizing permanent magnet which acts to maintain the electromagnetic functional part in axial working position with respect to the stator of radial electromagnetic bearing and the stator of electrical rotation drive and a variable component excited by the stabilizing electromagnet, which acts for stabilization of working position of the electromagnetic functional part during its deflection from the working position, and wherein the driving magnetic flux, which is being excited by a driving electromagnet of the stator of electrical rotation drive, at least one tangential force is created inducing the rotation movement of electromagnetic functional part.

The invention further relates to the electromagnetic bearing and driving system of radial electromagnetic bearing and electrical rotation drive for active levitation and centering of electromagnetic functional part of radial electromagnetic bearing and electrical rotation drive, which is moveably and rotatably mounted in the stator of radial electromagnetic bearing and electrical rotation drive in the space between the stator of radial electromagnetic bearing and the stator of the electrical rotation drive, wherein the electromagnetic functional part comprises the common parts of electrical rotation drive and radial electromagnetic bearing, which are to be found in the magnetic field of stator of radial electromagnetic bearing and simultaneously in the magnetic field of stator of electrical rotation drive, and the system further comprises means for monitoring the position and/or speed and/or acceleration of rotation of the electromagnetic functional part of radial electromagnetic bearing and electrical rotation drive and a control unit, which is connected with stabilizing electromagnets of the stator of the radial electromagnetic bearing, wherein each stabilizing electromagnet comprises a core around which there is wound up a stabilizing coil and the stabilizing electromagnets are equipped with common pole pieces, which are between the adjoining stabilizing electromagnets divided by spaces, wherein the pole pieces cover on each stabilizing electromagnet at least a part of the core and a part of the winding of the stabilizing coil.

The invention further relates to a spinning mechanism of a rotor spinning machine comprising the a spinning rotor and an electromagnetic bearing and driving system.

### Background art

The background art includes electromagnetic bearings that by means of permanent magnets increase the loading capacity thanks to the permanent magnetic bias. These electromagnetic bearing systems designated in literature also as unipolar bearings are characterised by that the variable stabilizing electromagnetic flux does not run through permanent magnets. This method can induce great forces, nevertheless the disadvantage are increased space requirements and the high costs which are caused due to a large number of details necessary. The electromagnetic stator is usually provided with grooves and so the distribution of magnetic flux density around the circumference of the rotor is not homogenous and during one revolution changes in face of the rotor.. It results, especially at the high speed of rotor, in considerable losses of the rotor both due to eddy current and due to re-magnetization.

Next to this, the background art further includes the magnetically biased segment magnetic bearings (T. Feichtner, the diploma thesis at the Johann Kepler University, Linz, 2004). These electromagnetic bearings are characterised by that the permanent magnetic flux is being increased or weakened by means of systems of coils. Through arrangement of the coils, the controllable forces serving for contact less magnetic mounting of a rotor can be created. Geometric arrangement of coils and of permanent magnets enables a mounting of disc rotors with active stabilisation of two degrees of freedom. The remaining degrees of freedom (with the exception of turning around the rotation axis) are in the case of this arrangement stabilised passively through the reluctance forces. The disadvantage of this arrangement lies in that there are arranged more segments in a split manner around the circumference. This results in higher complication of device and higher costs for assembling. It is also necessary, especially in a case of rotor high speeds, to count on the considerable losses of rotor caused by eddy current and hysteresis.

The US 4 918 345 A describes a magnetic bearing for an active centering of a body movable with respect to the static body taking into account at least one centering axis being perpendicular to the reference axis. This bearing comprises, on each side of symmetry plane perpendicular to at least one centering axis and comprising the reference axis, at least one permanent magnet being magnetized parallel with the reference axis, and at least one assembly comprising the coil wound onto the ferromagnetic core arranged to create the magnetic flux being parallel with the reference axis. The mentioned at least one assembly of a coil with ferromagnetic core is inserted between the two ferromagnetic boards, which are adapted for creating of closed magnetic lines of force for a magnetic flux created by the mentioned assembly through the air gaps dividing the moving body from the static body. In the moving body there is created the ferromagnetic pole shoe serving to create the enclosed magnetic lines of force through the air gaps for the magnetic flux from the ferromagnetic boards. Next to this, the magnetic bearing comprises the sensor of relative movement between the moving and static body alongside the centering axis and the control circuit ensuring supply of electrical current to the mentioned at least one coil assembly with ferromagnetic core and ferromagnetic boards for correction of the detected relative movement.

The main disadvantage of this arrangement is the ferromagnetic core a cavity of the coil, which is from the point of view of magnetic flux created by the permanent magnet inserted in the principle in a parallel way between the ferromagnetic pole shoes, thus causing partial electromagnetic short circuit between the poles of the permanent magnet, thus reducing the achievable magnetic intensity in the gap of magnetic bearing, through which it reduces its carrying capacity. An electromagnetic bearing and driving system according to the preamble of claim 2 and a corresponding method according to the preamble of claim 1 are known from document US 4 285 553 A, which describes an inner ring-like stator member, having U cross section with axial ring-like web and two parallel radial flanges, and being created from ferromagnetic material, and in which there are arranged four segment coils for controlling of radial position of the outer rotor member. The rotor member comprises axial ring-like permanent magnet inserted between the ring-like pole shoes, which are in the planes of the radial flanges of the stator member. The permanent magnet creates in the ring-like gap between the flanges and pole shoes radial magnetic fluxes, which ensure alignment of the rotor member with the stator member, thus the rotor member is positioned in three degrees of freedom (shifting around the Z axis, rotation around X axis and rotation around the Y axis).

According to US 2- 5 982 065 A the stabilizing permanent magnet may be placed both in the rotor and also in the stator of the magnetic bearing. The stabilizing coils are in this embodiment wound around separate cores at the edges of the stator sheets and the stabilizing permanent magnet is ring-like and is placed in an inner space between the coils. From the CZ 294 707 B6, which corresponds to DE 101 63 979 A1, is known a spinning mechanism of a rotor spinning machine which comprises the spinning rotor formed of two-sided opened body in the shape of ring with the inlet hole and the outlet hole. In a rotating manner, the spinning rotor is positioned in the air chamber coupled with the underpressure source and assigned to it is the stator of synchronous electrical machine comprising at least two electromagnetic coils. The spinning rotor is composed of at least a body, which is designated for the spinning function and creates the carrying section of at least one permanent magnet which is designed for the function of electrical rotor. Stator of the synchronous electrical machine creates a part of walls of an air chamber, in whose internal space the spinning rotor is positioned. In the described execution the stator comprises at least two electromagnetic coils, which act upon the permanent magnet of the rotor by a magnetic field with the axial component force, which maintains the rotor with permanent magnet in operation position and with the rotation component force, which starts to run the rotor with permanent magnet in the given direction and maintains it in the rotational movement. The disadvantage of this arrangement is a common stator for drive and stabilisation of rotor of the spinning machine, which brings problems with speed and quality of rotor position stabilisation and brings great demand as to the energy consumption for rotational drive and position stabilisation, especially in the event of very high rotation speed of spinning rotor when considerable loss of energy appears, due to eddy current and hysteresis.

The objective of invention is to eliminate the shortcomings of the state of the art and to produce an electromagnetic bearing and driving system with minimum power demand as to the stabilisation of the bearing system usable also for mounting and drive of a rotor of a rotor spinning machine for very high rotation speed over 100.000 min⁻¹.

### The principle of invention

The goal of invention has been achieved through the method of levitating, centering, stabilization and driving of an electromagnetic functional part of radial electromagnetic bearing and electrical rotation drive as defined in claim 1 and an electromagnetic bearing and driving system as defined in claim 2 and a spinning mechanism of a rotor spinning machine with the system according to the invention. The principle of the method of levitation, centering, stabilization and the drive of electromagnetic functional part of radial electromagnetic bearing and electrical rotation drive according to the invention consist in that the permanent component of the stabilizing magnetic flux of the radial electromagnetic bearing is being created by the help of at least one stabilizing permanent magnet arranged in cores of the stabilizing coils of the stabilizing electromagnets of the radial electromagnetic bearing.

Through action of the stabilizing magnetic flux and driving magnetic flux from separate sources the power requirements for levitation, centering and stabilization of electromagnetic functional part of radial electromagnetic bearing and electrical rotation drive in the electromagnetic bearing are reduced and its trouble free rotation drive is being ensured. Separation of sources of the stabilizing magnetic flux and of the driving magnetic flux allows an easy and quick reaction of bearing and driving system to the change of position and/or speed and/or acceleration of rotation of the electromagnetic functional part of the radial electromagnetic bearing and electrical rotation drive. Through this method also the requirements as to the complication and complexity of electronic control system and of its software equipment are considerably reduced.

The permanent component of the stabilizing magnetic flux excited by a permanent magnet causes the static magnetic flux in the bearing thus ensuring an important portion of its carrying capacity. Creation of permanent component of the stabilizing magnetic flux in a common area with the variable component of the stabilizing magnetic flux inside the core of the stabilizing coils between the pole pieces of the stabilizing electromagnets enables to specify and to accelerate the levitation, centering and stabilization of electromagnetic functional part and to reduce power requirements as to this activity. A low magnetic conductivity of permanent magnets simultaneously eliminates the negative effect of ferromagnetic core of coils of stabilizing electromagnets described in the background art.

The principle of electromagnetic bearing and driving system of radial electromagnetic bearing and electrical rotation drive according to the invention consists in that the cores of the stabilizing electromagnets of the stator of radial electromagnetic bearing are formed at least partly by permanent magnets, which are magnetized parallel with the axis of electromagnetic functional part of radial electromagnetic bearing and electromagnetic rotation drive.

At least one part of magnetic flux induced by the permanent magnet is superimposed by at least one section of magnetic flux induced by the electromagnet. The fact that the ferromagnetic plates cover only a portion of winding of the corresponding stabilizing coil prevents leakage of magnetic flux and thus reduces power losses of the system. The portion of the winding of stabilizing coil which is not overlapped by ferromagnetic plates is adjoining with the air which has a great magnetic resistance, therefore the magnetic flux of stabilizing electromagnet concentrates into the magnetic plates. Inductivity of such stabilizing coil is smaller and as a result also its time response is smaller what is convenient for the control system.

Through the separated control of the stator of radial electromagnetic bearing the stator of electrical rotation drive in case of necessity the auxiliary forces acting on the electromagnetic functional part in radial direction and/or axial direction and/or tangential direction towards elimination of revealed deviation of acceleration and/or speed and/or position of electromagnetic functional part may be induced.

The permanent magnets in the coil cores may with advantage be equipped with an auxiliary ring permanent magnet formed of one piece and mounted inside the space between the stabilizing coils or each stabilizing coil of stator of the radial electromagnetic bearing may be equipped with an auxiliary stabilizing permanent magnet, which is mounted inside the space between the stabilizing coils.

Structurally and power advantageous arrangement seems to be that one, at which the pole pieces laying in one plane in the upper side of stabilizing electromagnets are in their part adjacent to the electromagnetic functional part of radial electromagnetic bearing and electrical rotation drive connected by means of thin connecting bridges into upper ferromagnetic plates and pole pieces laying in one plane in the bottom side of stabilizing electromagnets are in their section adjacent to the electromagnetic functional part of radial electromagnetic bearing and electrical rotation drive connected by means of thin connecting bridges into bottom ferromagnetic plate, while stabilizing electromagnets of the stator of radial electromagnetic bearing and the permanent magnets of the stator of radial electromagnetic bearing are positioned between these upper and bottom ferromagnetic plates, while the spaces between the adjoining pole pieces in corresponding ferromagnetic plate are becoming broader outwards from the connecting bridges, which further reduces power requirements of the system.

The connecting bridges connect magnetically more than one pole of electromagnet and/or of permanent magnet and they conduct at least one component of dispersion magnetic flux. Upon passage of magnetic flux through the connecting bridge the geometric shape of the bridge ensures in an area of the bridge a magnetic saturation or a status close to magnetic saturation, which brings reduction in power requirements of the system especially at a stable electromagnetic function part running in high rotational speed.

The most advantageous arrangement of ferromagnetic plates seems to be their shape, when the side edges of adjoining poles pieces of ferromagnetic plate form an angle close to 90°.
The electrical rotation drive may be formed by the electrical motor or electrical machine with the function of motor and electrical generator. In case that the electrical machine with function of electrical generator rotates only and the stabilization is not being performed, this electrical machine produces electrical current due to surplus of kinetic energy.

The electrical rotation drive may be arranged in various manners so that it complies best with the technological requirements placed on the equipment comprising the electromagnetic bearing and driving system. In an advantageous embodiment the stator of electrical rotation drive is positioned inside the electromagnetic functional part which is mounted inside the stator of radial electromagnetic bearing, through which the electrical rotation drive with external rotor is created.

It is hereat advantageous if the electromagnetic functional part is formed by a rotor, which comprises a ring-shaped carrying body of non-ferromagnetic material, on its inner side there is mounted at least one driving permanent magnet for cooperation with the stator of the electric rotary drive and on its outer side there is a ferromagnetic ring for cooperation with stator of the radial electromagnetic bearing.

In another embodiment the stator of electrical rotation drive is positioned against at least one face part of electromagnetic functional part, which is mounted inside the stator of radial electromagnetic bearing, through which the electrical rotation drive with a disc rotor is created.

For the final industrial usage of electromagnetic bearing and driving system, the application specific component is mounted on the electromagnetic functional part of radial electromagnetic bearing and electrical rotation drive in a co-axial manner.

Whereas by this application the specific component of electromagnetic bearing and driving system may be represented by the spinning rotor of a rotor spinning machine.

The principle of the spinning mechanism of the rotor spinning machine which comprises the spinning rotor consists in that the spinning rotor is in a co-axial manner mounted on an electromagnetic functional part of radial electromagnetic bearing and electrical rotation drive of electromagnetic bearing and driving system and creates the technological working member of this system.

At the same time it is advantageous, if the spinning rotor is formed by a double-sided opened body, provided with the inlet aperture for entry of singled-out textile fibres and with outlet aperture for draw-off the spun yarn, which is connected to the aperture created in stator of the electrical rotation drive while the draw-off yarn nozzle for draw-off the spun yarn is positioned in this aperture.

To secure a continuous flux of material through the technological process of rotor spinning is it further advantageous, if the spinning rotor is positioned vertically and the singled-out textile fibres enter it from below and the spun yarn is drawn-off in the direction upwards.

According another possible execution of the spinning rotor, according to which the spinning rotor has a closed bottom and opposite to the bottom there is created an aperture for inlet of singled-out textile fibres and draw out of the spun yarn.

### Description of the drawing

Examples of embodiment of the electromagnetic bearing and driving system and spinning mechanism of rotor spinning machine according to the invention are schematically shown in enclosed drawings in which Fig. 1a, 1b shows electromagnetic bearing and driving system with a disc electrical rotation drive, Fig. 2 shows ferromagnetic plate, Fig. 3a, 3b shows electromagnetic bearing and driving system with an auxiliary annular stabilizing permanent magnet, Fig. 4a, 4b shows electromagnetic bearing and driving system with four auxiliary stabilizing permanent magnets, which is not in accordance with the invention Fig. 5a, 5b, 5c shows electromagnetic bearing and driving system with a inner electrical rotation drive, Fig. 6a, 6b, 6c shows electromagnetic bearing and driving system with driving coils arranged into a co-axial ring with the axis of rotor, Fig 7 shows electromagnetic bearing and driving system with an external rotor, Fig. 8a, 8b shows electromagnetic bearing and driving system with axially deflected rotor and with rotor deflected from the vertical position, Fig. 9 shows electromagnetic bearing and driving system for rotor spinning machine, Fig. 10 arrangement of electromagnetic bearing and driving system with sensors of position and/or speed and/or acceleration of rotor and Fig. 11 arrangement of electromagnetic bearing and driving system with means for monitoring the value of current or voltage.

### Examples of embodiment

Electromagnetic bearing and driving system according to the invention will be described on several examples of embodiment illustrated in drawings when in the space between the stator **1** of radial electromagnetic bearing and the stator **2** of electrical rotation drive in a moveable and rotatable manner there is mounted the rotor **3**, which represents electromagnetic functional part of radial electromagnetic bearing and of electrical rotation drive. This electromagnetic functional part comprises the common parts of electrical rotation drive and of radial electromagnetic bearing, which are situated in magnetic field of the stator **1** of radial electromagnetic bearing and simultaneously in magnetic field of the stator **2** of electrical rotation drive.

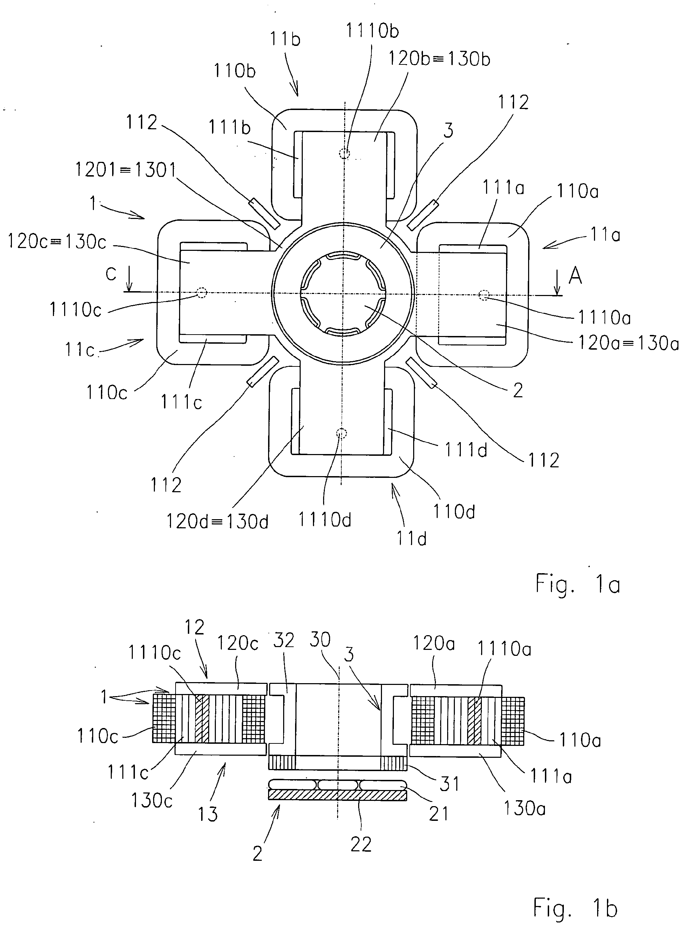

In the example embodiment according to the Fig. 1a, 1b the rotor **3** is mounted inside the stator **1** of radial electromagnetic bearing. The stator **2** of electrical rotation drive is mounted against the lower face section of the rotor **3**, while on this face section of the rotor **3** there is mounted at least one driving permanent magnet **31.** The stator **2** of electrical rotation drive comprises at least one driving electromagnet comprising at least one driving coil **21** mounted on the support **22** of the stator, which in the illustrated example of embodiment is formed by the flat body but it can be created in another way corresponding to technological and structural requirements of the device in which the electromagnetic bearing and driving system is applied. In the illustrated embodiment the number of driving coils **21** is six and the number of driving permanent magnets **31** equals also to six.

The rotor **3** creating electromagnetic functional part comprises the common parts of radial electromagnetic bearing and of electrical rotation drive which are positioned in magnetic field of the stator **1** of radial electromagnetic bearing and simultaneously in magnetic field of the stator **2** of electrical rotation drive. These common parts at the embodiment according to the Fig. 1a, 1b are formed by at least one driving permanent magnet **31**, which creates a part of electrical rotation drive and is mounted on the face of rotor **3** against the stator **2** of electrical rotation drive, and by the ferromagnetic ring **32** with electromagnetic function, which creates a rotation part of radial electromagnetic bearing.

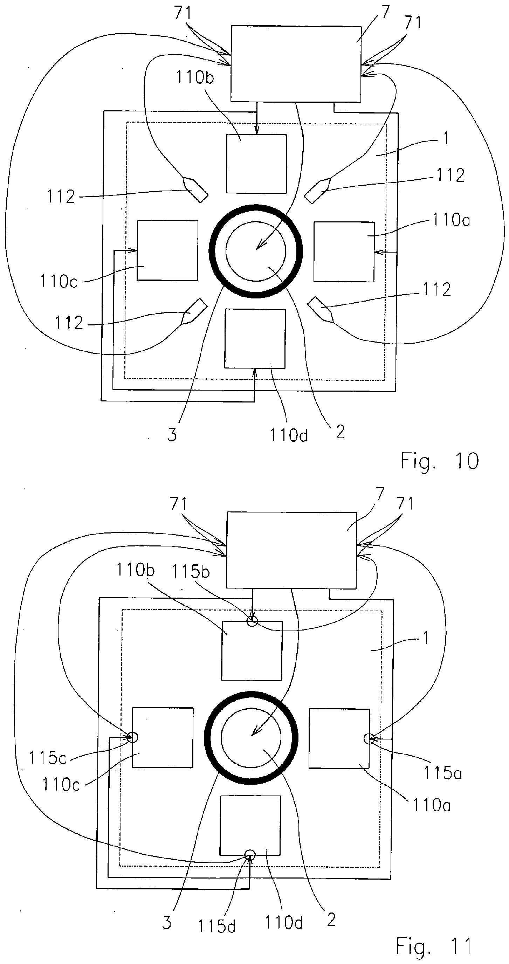

The stator **1** of radial electromagnetic bearing comprises four stabilizing electromagnets **11a**, **11b**, **11c**, **11d**, which are formed by the stabilizing coils **110a, 110b, 110c, 110d** being wound around the cores **111a, 111b, 111c, 111d,** which are at least partially formed by the stabilizing permanent magnets **1110a, 1110b, 1110c, 1110d,** while the remaining parts of cores **111a, 111b, 111c, 111d** are formed by a non-ferromagnetic material. According to the technological requirements as to the resultant electromagnetic bearing and driving system the remaining parts of cores **111a**, **111b**, **111c**, **111d** may be created of a ferromagnetic material or the whole cores **111a**, **111b**, **111c**, **111d** may be created of the stabilizing permanent magnets **1110a**, **1110b**, **1110c**, **1110d.** The stabilizing permanent magnets **1110a**, **1110b**, **1110c**, **1110d** are magnetized parallel with the axis **30** of rotation of the rotor **3** in working position. The stabilizing coils **110a**, **110b**, **110c**, **110d** are coupled with power supply via the control unit separately from the driving coils **21** of electrical rotation drive, which is shown in Fig. 10. The stabilizing electromagnets **11a**, **11b**, **11c**, **11d** are provided with the pole pieces **120a**, **120b**, **120c**, **120d**, **130a**, **130b**, **130c**, **130d.** The pole pieces **120a**, **120b**, **120c**, **120d** laying in one plane on upper side of the stabilizing electromagnets **11a**, **11b**, **11c**, **11d** in their section adjacent to the rotor **3** are connected by thin connecting bridges **1201** into the upper ferromagnetic plate **12** and the pole pieces **130a**, **130b**, **130c**, **130d** laying in one plane on lower side of the stabilizing electromagnets **11a**, **11b**, **11c**, **11d** in their section adjacent to the rotor **3** are connected by thin connecting bridges **1301** into the bottom ferromagnetic plate **13.** The Fig. 1a shows only the upper ferromagnetic plate **12.** The bottom ferromagnetic plate **13** is shown in the Fig. 1b. The stabilizing electromagnets **11a**, **11b**, **11c**, **11d** of stator of radial electromagnetic bearing and the stabilizing permanent magnets **1110a**, **1110b**, **1110c**, **1110d** of the stator of radial electromagnetic bearing are positioned between the upper ferromagnetic plate **12** and the bottom ferromagnetic plate **13.** The ferromagnetic plates **12** and **13** overlap the stabilizing permanent magnets , a part of the core **111a**, **111b**, **111c**, **111d** and a part of winding of the stabilizing coils **110a**, **110b**, **110c**, **110d** of stabilizing electromagnets **11a**, **11b**, **11c**, **11d.**
At the stabilizing permanent magnet **1110a**, **1110b**, **1110c**, **1110d** it is necessary to take care that these stabilizing permanent magnets **1110a**, **1110b**, **1110c**, **1110d** have, if possible the same remanent density of magnetic flux and the same coercive force, so that the rotor **3** even in cases of very small currents and at inconsiderable external forces is stabilized in geometric center of the system. On the contrary, the stabilizing permanent magnets **1110a**, **1110b**, **1110c**, **1110d** with different properties of material may be used so that the constant forces, e.g. the force of gravity, are compensated in geometric mean position.

On its perimeter the ferromagnetic ring **32** is provided with a groove, which forms two annular protrusions on the perimeter and on its lower face there is mounted the driving permanent magnet **31** of an annular shape. The annular protrusions on the perimeter of the rotor **5** in the balanced position of the rotor **5** are positioned against the ferromagnetic plates **12**, **13.** Shaping of the rotor **3** contributes to lowering the losses caused by eddy currents.

In a not illustrated embodiment the mentioned annular protrusions are made of ferromagnetic sheets having a high magnetic conductivity and the rest of the rotor is made of a common ferromagnetic material. This embodiment enables to maintain the losses caused by an eddy currents , which may occur especially in a case of high lateral forces and rotor high speed, on a very low level.
Between the stabilizing electromagnets **11a**, **11b**, **11c**, **11d** of stator of radial electromagnetic bearing there are positioned the sensors **112** of position and/or speed and/or acceleration of rotor **1**, which are connected with the inputs **71** of the control unit **7**, as illustrated in the Fig. 11.

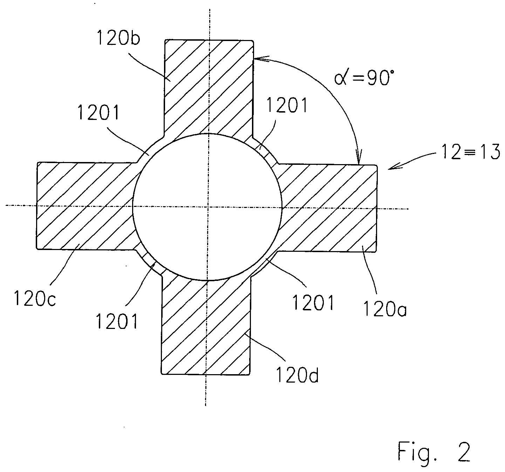

The ferromagnetic plate **12**, **13** is also shown in the Fig. 2. In this figure a rectangle shape of the pole pieces **120a**, **120b**, **120c**, **120d** and a shape of connecting bridges **1201** is quite obvious, at the same time it is evident that the corresponding parts on the bottom ferromagnetic plate **13** are identical. The side edges of adjoining pole pieces **120a, 120b, 120c, 120d** of the ferromagnetic plate form an angle **α** which in the shown embodiment equals to 90°. In other not shown embodments the angle **α** is smaller or bigger than 90°. The side edges of adjdning pole pieces **120a**, **120b**, **120c**, **120d** of the ferromagnetic plate may also be differently shaped. At the same time it is advantageous if the spaces between these edges are becoming broader from the connecting bridges **1201** in the direction outwards.

The free section of winding of the stabilizing coils **110a**, **110b**, **110c**, **110d** of stabilizing electromagnets adjoin with air which has a great magnetic resistance. Therefore the magnetic flux of stabilizing electromagnets **11a**, **11b**, **11c, 11d** concentrates into the ferromagnetic plates **12**, **13**. The stabilizing coils **110a**, **110b**, **110c**, **110d** with a free section of winding have a lower inductance, and due to this also a lower time response and they enable a quicker reaction to the control system.

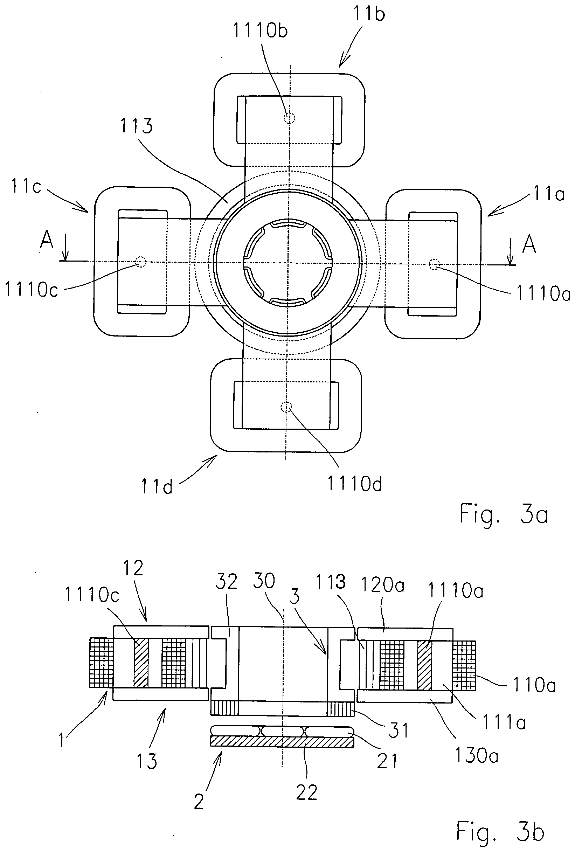

At the example of embodiment shown in the Fig. 3a, 3b the electromagnetic bearing and driving system is formed similarly as the above described embodiment according to the Fig. 1a, 1b. The difference between the embodiments consists in that the cores **111a**, **111b**, **111c**, **111d** of stabilizing electromagnets and around these cores **111a**, **111b**, **111c**, **111d** wound up stabilizing coils **110a**, **110b**, **110c**, **110d** according to the Fig. 3a, 3b are smaller than in embodiment according to the Fig. 1a, 1b. Inside the space between the stabilizing coils **110a**, **110b**, **110c**, **110d** there is positioned an auxiliary annular stabilizing permanent magnet **113** being magnetized parallel with the axis **30** of the rotor **3** in the working balanced position. The electromagnetic bearing and driving system according to this embodiment is able to develop a greater stabilizing action on the rotor **3** especially in embodiments, when the auxiliary annular stabilizing permanent magnet **113** is used together with the stabilizing permanent magnets **1110a**, **1110b**, **1110c**, **1110d** in several stabilizing electromagnets **11a**, **11b**, **11c**, **11d.**

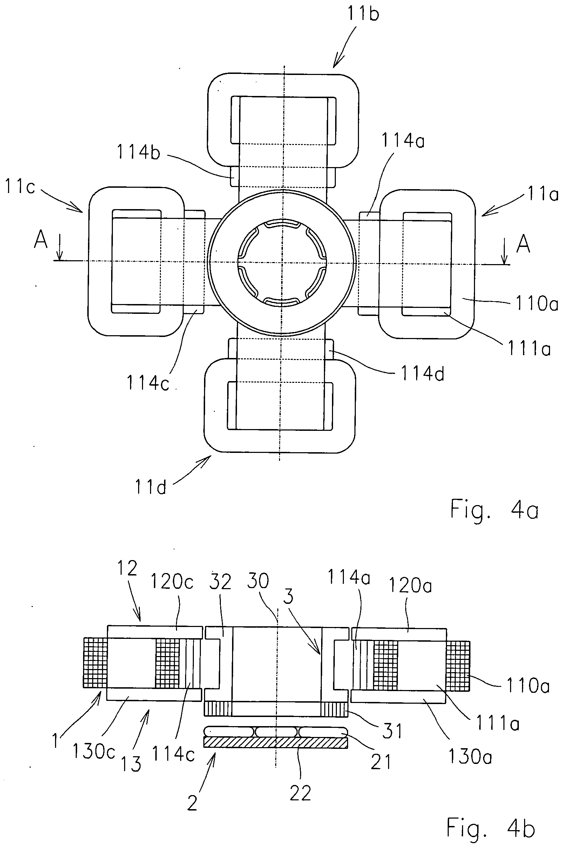

This solution provides less space to placing the sensors of position and/or speed and/or acceleration of the rotor, and therefore the monitoring of these parameters is realized with advantage according to the Fig. 11. The stator **1** of radial electromagnetic bearing and stator **2** of electrical rotation drive are connected with the control unit **7**, which comprises the means for calculation/evaluation of position and/or speed and/or acceleration of the rotor based on monitoring of electrical values of their power supply and which is able of a separate control of the stator **1** of radial electromagnetic bearing and the stator **2** of electrical rotation drive. In an embodiment which is not in accordance with the invention illustrated in the Fig. 4a, 4b instead of the auxiliary annular stabilizing permanent magnet comprises four auxiliary stabilizing permanent magnets **114a 114b**, **114c**, **114d** in the shape of cuboids, which are mounted inside the space between the stabilizing coils **110a**, **110b**, **110c**, **110d** and which are being magnetized parallel with the axis **30** of the rotor **3** in the working balanced position. Other parts of the radial electromagnetic bearing as well as of the electrical rotation drive are created in the same way as in the earlier described embodiments. Only the cores **111a**, **111b**, **111c**, **111d** of stabilizing electromagnets do not comprise the stabilizing permanent magnets **1110a**, **1110b**, **1110c**, **1110d.** As regards monitoring of position and/or speed and/or acceleration of rotor **1** both above described variants may be used at this solution. The stabilizing permanent magnets in the cores of stabilizing electromagnets in accordance with the invention may be used too, which is not shown in Fig. 4a, 4b.

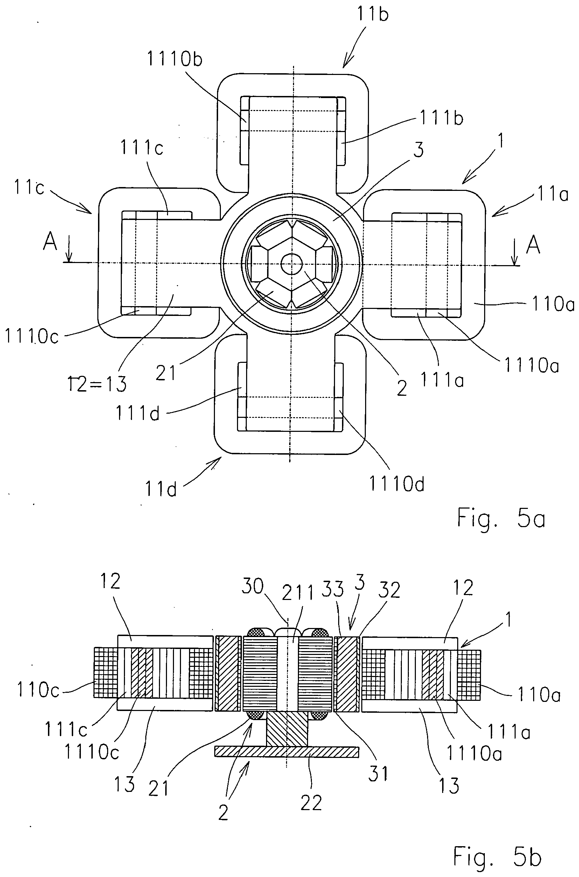

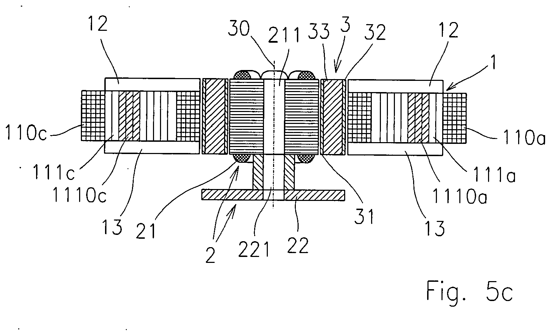

In the example of embodiment according to the Fig. 5a, 5b, 5c the rotor **3** is mounted inside the stator **1** of radial electromagnetic bearing. The rotor **3** is formed in the shape of a ring in whose inner aperture there are situated the driving coils **21** of stator **2** of electrical rotation drive, which are mounted on a support **22.** Between the driving coils **21** of stator of electrical rotation drive there is created an aperture **211**, whose axis is identical with the axis **30** of the rotor in the working balanced position. The support **22** may be created as the filled one, as shown in the Fig. 5b or with an aperture **221** being co-axial with the aperture **211** of the stator **2** of electrical rotation drive.

The rotor **3** in the shown embodiment is formed by a carrying body **33** of an annular shape on whose inner side there is mounted at least one driving permanent magnet **31**, which has been formed in the shape of a ring composed either of several segments or composed of one piece that is multipole magnetized in a corresponding way. On the outer side there is the carrying body **33** of rotor provided with ferromagnetic ring **32**, which creates the rotation part of radial electromagnetic bearing and is made of ferromagnetic material. The carrying body **33** is made of non-ferromagnetic material, e.g. of aluminium or plastic.

The stator **1** of radial electromagnetic bearing has been formed similarly as at the embodiment according to the Fig. 1a, 1b. The cores **111a**, **111b**, **111c**, **111d** of stabilizing electromagnets comprise greater stabilizing permanent magnets **1110a**, **1110b**, **1110c**, **1110d**, as shown in the Fig. 5a. Inner surface of stabilizing coils **110a**, **110b**, **110c**, **110d** facing the rotor **3** in the place being closest to the rotor **3** connects to the inner surfaces of apertures in the ferromagnetic plates **12**, **13** thus creating in the place being closest to the rotor **3** an even gap. This modification contributes to lowering of eddy currents and to reduction of power demands of the system.

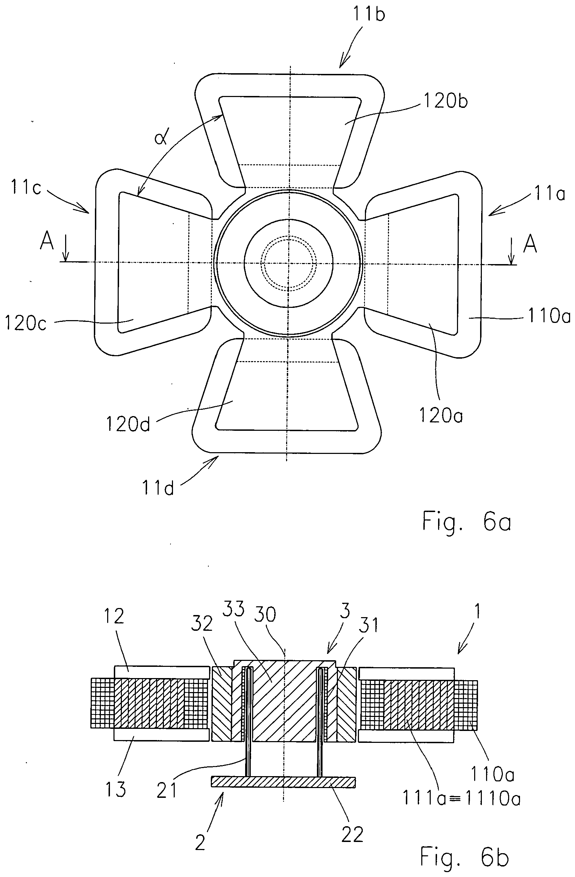

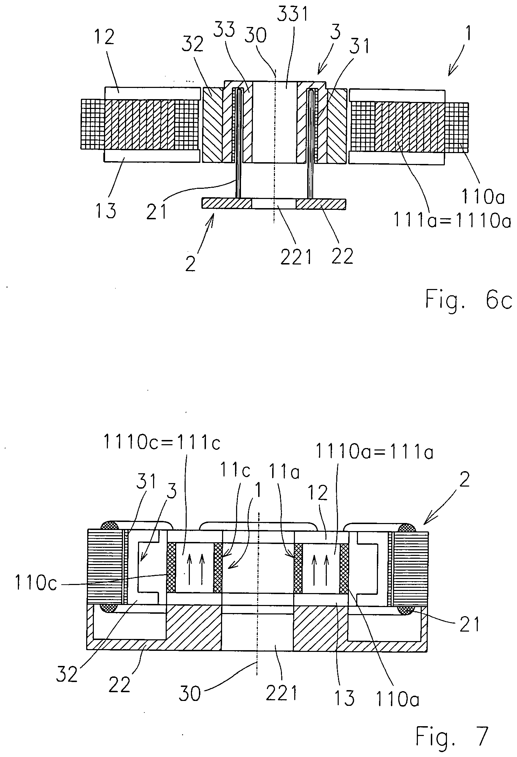

At the example of embodiment according to the Fig. 6a, 6b, 6c the rotor **3** is placed inside of aperture of the stator **1** of radial electromagnetic bearing. The stator **2** of electrical rotation drive comprises the driving coils **21**, which are on the support **22** of stator of electrical rotation drive arranged into a ring being co-axial with the axis **30** of the rotor in the working balanced position. In the carrying body **33** of rotor there is formed an annular recess, into which the driving coils **21** trench, while around the driving coils **21** in the annular recess there is mounted the driving permanent magnet **31**, formed through some of earlier described manners. On outer perimeter of the carrying body **33** of rotor there is mounted the ferromagnetic ring **32** with electromagnetic function, which represents a rotation part of radial electromagnetic bearing.

Stabilizing electromagnets **11a**, **11b**, **11c**, **11d** of stator of radial electromagnetic bearing comprise the cores **111a**, **111b**, **111c**, **111d** of trapezoidal shape, and in the respective manner are also formed the pole pieces **120a**, **120b**, **120c**, **120d** of both ferromagnetic plates **12**, **13**. The cores **111a**, **111b**, **111c**, **111d** of the stabilizing electromagnets are formed only from stabilizing permanent magnets **1110a**, **1110b**, **1110c**, **1110d.** The adjoining edges of pole pieces **120a**, **120b**, **120c**, **120d** form an angle **α**, whereas the space between them becomes broader in the direction outside from the rotor **3**.

In Fig. 6b the carrying body **33** of rotor is full body without aperture. At the example of embodiment according to the Fig. 6c the carrying body of rotor has an aperture **331** co-axial with the aperture **221** in the support **22** of stator **2** of electrical rotation drive.

At the example of embodiment according to the Fig. 7 the stator **1** of radial electromagnetic bearing is formed by a ring with inner aperture and outside this stator **1** there is positioned the rotor **3**. Outside the rotor **3** there is positioned the stator **2** of electrical rotation drive, which comprises around its perimeter distributed the driving coils **21** and it is mounted on the support **22** together with the stator **1** of radial electromagnetic bearing. At this embodiment the rotor **3** is formed by the ferromagnetic ring **32** with electromagnetic function, which creates its inner section and represents the rotation part of the radial electromagnetic bearing. On an outer perimeter of the ferromagnetic ring **32** there is mounted the driving permanent magnet **31** formed through some of earlier described manners.

In advantageous arrangement is an electrical rotation drive formed by the electrical motor or electrical machine with the function of motor and electrical generator. In case that the electrical machine with function of electrical generator rotates only and the stabilization is not being performed, this electrical machine produces electrical current due to surplus of kinetic energy.

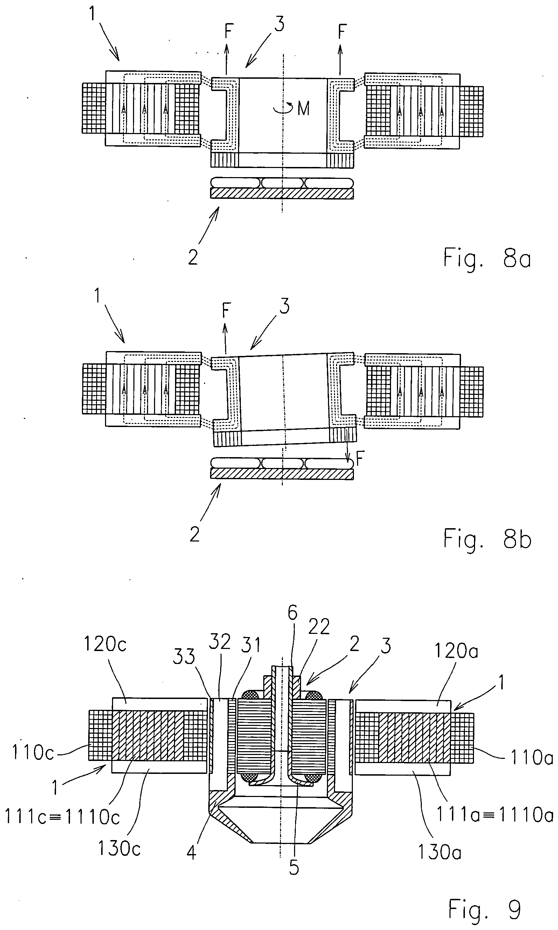

The objective of the rotor **3** is to conduct the magnetic flux, which as shown in the Fig. 8a, 8b, enters into it e.g. from the upper ferromagnetic plate **12** in a radial manner through an air gap between the stator **1** of radial electromagnetic bearing and the rotor **3.** In the rotor **3** the magnetic flux runs in an axial direction and it closes through the air gap into the bottom ferromagnetic plate **13**.

The Fig. 8a, 8b shows the electromagnetic bearing and driving system with electrical rotation drive with a disc rotor, as described above as regards the Fig. 1. The Fig. 8a shows the rotor **3** deflected axially from its operation position in the direction towards the stator **2** of electrical rotation drive, while the real axis of the rotor **3** is identical with the rotation axis **30** of rotor in a balanced working position. The rotor **3** is to be found in this position e.g. before the electromagnetic bearing and driving system get moving. By current supply into all stabilizing coils **110a**, **110b**, **110c**, **110d** of stabilizing electromagnets the magnetic flux is induced passing from the upper ferromagnetic plate **12** via the ferromagnetic ring **32** of the rotor into the bottom ferromagnetic plate **13**, and this magnetic flux induces a levitation force **F** which lifts and consequently maintains the rotor in the levitation position between the stabilizing electromagnets **11a**, **11b**, **11c**, **11d** of the stator of radial electromagnetic bearing, at the same time it centers the rotor **3** as shown in the Fig. 1-7. In this case the source of magnetic flux is represented by the stabilizing coils **110a**, **110b**, **110c**, **110d** of stabilizing electromagnets of the stator **1** of radial electromagnetic bearing.

The Fig. 8b shows an embodiment when the axis **30** of rotor is deflected from the vertical position. Equalizing forces F are acting upon the deflected rotor **3** through the action of which the rotor **3** return to the working position.

For monitoring of position and/or speed and/or acceleration of the rotor **3** there are the sensors **112** of position and/or speed and/or acceleration of rotor, illustrated schematically in the Fig. 1a and 10, whose signal is conduct to inputs **71** of the control unit **7**. Based on information from the sensors **112** of position and/or speed and/or acceleration of the rotor **3** the control unit **7** controls the values of current-carrying through the several stabilizing coils **110a**, **110b**, **110c**, **110d** of stabilizing electromagnets of the stator **1** of radial electromagnetic bearing and separately from this regulation the control unit **7** regulates the values of current running through the driving coils **21** of the stator **2** of rotation electrical drive and as a result of this it quickly and with a minimum power demand equalizes each deflection of position and/or speed and/or acceleration from their in advance set value.

The sensors **112** of position and/or speed and/or acceleration of the rotor may be replaced by the means **115a**, **115b**, **115c**, **115d** for monitoring the value of current or voltage being conduct to the stabilizing coils **110a**, **110b**, **110c**, **110d** of stabilizing electromagnets of the stator **1** of radial electromagnetic bearing, while these means **115a**, **115b**, **115c**, **115d** are connected with inputs **71** of the control unit **7** as it is illustrated on the Fig. 11. If the control unit **7** reveals on some of the stabilizing coil **110a**, **110b**, **110c**, **110d** any change in value of current or voltage, corresponding to deflection of rotor **3** out of the axis, it evaluates this change and separately from control of the electrical rotation drive it changes the value of current or voltage conducting to the several stabilizing coil with the purpose to return the rotor **3** into the in advance defined working position. Separately from this control the control unit **7** controls the value of current conducting through the driving coils **21** of the stator **2** of rotation electrical drive in as a result of this it quickly and with a minimum power demand equalizes each deflection of position and/or speed and/or acceleration from their in advance set value.

The driving coils **21** of electrical rotation drive and the driving permanent magnet **31** after conducting the electric current into the driving coils **21** create the magnetic field serving especially for starting the rotor **3** into a rotation movement and for keeping the rotor **3** in this rotation movement. At the embodiment of electrical rotation drive with the disc rotor **3**, as illustrated in the Fig. 1, 3, 4, 8, in the advantageous embodiment the driving permanent magnet **31** is formed by the ring which is magnetized in a four polar manner axially, while the north and south poles on each side of the driving permanent magnet **31** are positioned side by side one to another. To induce the turning moment acting upon the rotor **3** of electrical rotation drive with driving permanent magnets **31**, on the stator **2** of electrical rotation drive there is realized a system of driving coils **21**, which next to inducing the turning moment around the axis **30** of the rotor **3** are able to induce the forces in the direction against tilting of the rotor **3** and in case of need also the forces in radial and axial direction of the system. The turning moment serves to drive the rotor, the forces in radial and axial direction may be used to damp the vibration or also to compensate external forces acting upon the rotor **3**. Creation of driving forces as well as creation of control forces at this embodiment is based on so called Lorentz force, i.e. on action of the force of the conductor through which an electric current is fluxing in magnetic field. Depending on configuration of the coils and their connection it is possible, that the forces in radial direction are cancelled totally and only the turning moment remains here serving for a drive of the rotor **3** of electrical rotation drive. In principle it is always necessary keep at disposition so many independent coils and also so many independent components of current to be as high as the number of forces and of turning moments which are be adjust. If the turning moment, the force in axial direction and two forces in the direction of tilting are being adjust, four independent driving coils **21** and also four independent currents are needed. Whether the forces and turning moments are adjustable independently on an angle of the rotor, it depends also on a geometric embodiment of the coils, of the driving permanent magnet and on its magnetizing. In most embodiments, especially in the area of very high speeds of the rotor **3**, for stabilization of vibrations or oscillation of the rotor **3** is sufficient that the mean value of the turning moment, respectively forces that produce this moment, is adjustable in a suitable manner.

The number of auxiliary forces acting on rotor **3** is greater or equals to the number of degrees of freedom of rotor **3**, which is to be controlled, operated and/or stabilized. The number of active auxiliary forces and their direction and size is controlled according to the continuously monitored position, acceleration and/or speed of rotation of rotor **3**. The auxiliary forces are controlled based on signals related to the change of position and/or acceleration and/or speed of rotation of rotor **3** according to the in advance determined mathematical model or algorithm, which represents a part of control system or is implemented into it.

We will use the Fig. 1 for description of levitation, stabilizing and driving forces. If a force in direction to the left is being developed on the rotor **3**, the right hand side stabilizing coil **110a** must strengthen the magnetic flux of stabilizing permanent magnet **1110a** and the left hand side stabilizing coil **110c** must weaken the magnetic flux of stabilizing permanent magnet **1110c**. Through this the density of magnetic flux is increased in the right hand side section of air gap between the stator **1** of radial electromagnetic bearing and the rotor **3**, and simultaneously the density of magnetic flux in the left hand side section of air gap between the stator **1** of radial electric bearing and rotor **3** will be decreased. It results in action of forces on the rotor in the direction to the right. To create the orthogonal forces on the level of rotor, at least two systems of stabilizing coils independent one on another are necessary. In embodiment when three stabilizing coils are used, the star or delta switching may be used. If four coils are used it is suitable to use switching of opposite stabilizing coils **110a**, **110c** or **110b**, **110d**, when one stabilizing coil e.g. **110a** amplifies the magnetic flux of its corresponding stabilizing permanent magnet **1110a**, and the second stabilizing coil **110c** weakens the magnetic flux of its corresponding permanent magnet **1110c**.

In practice, the rotor **3** may be used for integration with a suitable technological working member, which is mounted in an axial manner on the rotor **3**. A suitable technological working member is e.g. the rotor of a pump, rotor of ventilator or a spinning rotor **4** of the rotor spinning machine as shown in the Fig. 9.

The spinning rotor **4** represents the main operational part of each operating unit of a rotor spinning machine, which comprises a number of side by side arranged operating units, out of which each serves independently for production of yarn. The singled-out textile fibers are fed into the spinning rotor in a known not illustrated manner, of these fibres the yarn is produced in the spinning rotor. The spinning rotor has an inlet aperture, into which the known not illustrated delivery channel of singled-out fibers is leading and from which the inner space of the spinning rotor **4** broadens into the collecting groove creating the broadest part of inner space of the spinning rotor **4**. The collecting groove serves to gather the singled-out fibres into the fibre band which by means of rotation of the spinning rotor **4** is changed into a yarn in a known manner. In a rear part of the spinning rotor **4** there is created an outlet aperture arranged coaxially with the inlet aperture. Into the outlet aperture there intervenes the hollow delivery nozzle **5** of yarn, through which the spun yarn is delivered from the spinning rotor **4** by means of a known not shown draw-off mechanism. The spinning rotor **4** has a vertical rotation axis, while its inlet aperture is positioned down, and the outlet aperture above.

In not shown embodiment the spinning rotor **4** is formed by the rotation body with closed bottom, opposite to which there is created an aperture for inlet of singled-out textile fibres and draw -off the spun yarn. The spinning rotor **4** is in a fixed manner mounted in the carrying body **33** of the rotor **3**, which is in shown embodiment created by a ring of the non-ferromagnetic material, for example of the aluminum alloy. The carrying body **33** of the rotor also may be created in other manner. On inner side of the annular carrying body **33** of the rotor there is mounted the driving permanent magnet **31** created in some of the earlier described manners. The driving permanent magnet **31** represents a rotation section of the rotation electrical drive, whose stator **2** is mounted inside the driving permanent magnet **31.** In the stator of rotation electrical drive there is provided an aperture, in which coaxially with the delivery nozzle **5** there is positioned the draw-off tube **6** of yarn. On the outer perimeter of the carrying body **33** of the rotor there is in a fixed manner mounted the ferromagnetic ring **32** with electromagnetic function, which represents a rotation section of the radial electromagnetic bearing, whose stator **1** is circumfused by the ferromagnetic ring **32** of the rotor, while opposite the ferromagnetic ring **32** there are arranged the stabilizing electromagnets, which as described above comprise the core **111a**, **111b**, **111c**, **111d**, which in the shown embodiment is formed by the stabilizing permanent magnets **1110a**, **1110b**, **1110c**, **1110d.** A section of each stabilizing coil and a core of the stabilizing electromagnet is covered from above by the upper pole piece **120a**, **120b**, **120c**, **120d**, which creates a part of the upper ferromagnetic plate **12**, and from below it is overlapped by a bottom pole piece **130a**, **130b**, **130c**, **130d**, which creates a part of the lower ferromagnetic plate **13.**

## Claims

1. The method of levitation, centering, stabilization and driving of a single electromagnetic functional part (3) of radial electromagnetic bearing and electrical rotation drive, which moves and rotates with respect to stator (1) of radial electromagnetic bearing and a stator (2) of electrical rotation drive through acting of components of magnetic flux, which based on monitoring the position and/or speed and/or acceleration of rotation of electromagnetic functional part (3) of radial electromagnetic bearing and electrical rotation drive induce forces acting upon electromagnetic functional part (3) of radial electromagnetic bearing and electrical rotation drive in axial and/or radial and/or tangential direction, wherein stabilizing magnetic flux and driving magnetic flux from separate sources (1, 2) of the magnetic flux simultaneously acts on the electromagnetic functional part (3) of radial electromagnetic bearing and electrical rotation drive being common for radial electromagnetic bearing and electrical rotation drive, wherein the stabilizing magnetic flux comprises a permanent component excited by a stabilizing permanent magnet (1110a, 1110b, 1110c, 1110d), which acts to maintain the electromagnetic functional part (3) in axial working position with respect to the stator (1) of radial electromagnetic bearing and the stator (2) of electrical rotation drive and a variable component excited by the stabilizing electromagnet (11a, 11b, 11c, 11d), which acts for stabilization of working position of the electromagnetic functional part (3) during its deflection from the working position, and wherein the driving magnetic flux, which is being excited by a driving electromagnet of the stator (2) of electrical rotation drive, creates at least one tangential force inducing the rotation movement of electromagnetic functional part (3), **characterized by that** the permanent component of the stabilizing magnetic flux of the radial electromagnetic bearing is being created by the help of at least one stabilizing permanent magnet (1110a, 1110b, 1110c, 1110d) arranged in cores (111a, 111b, 111c, 111d) of stabilizing coils (110a, 110b, 110c, 110d) of the stabilizing electromagnets (11a, 11b, 11c, 11d).

2. The electromagnetic bearing and driving system of radial electromagnetic bearing and electrical rotation drive comprising an electromagnetic bearing for active levitation and centering of an electromagnetic functional part (3) of radial electromagnetic bearing and electrical rotation drive, which is movably and rotatably mounted in a stator (1, 2) of radial electromagnetic bearing and electrical rotation drive in the space between the stator (1) of radial electromagnetic bearing and the stator (2) of electrical rotation drive, wherein the electromagnetic functional part (3) comprises the common parts of electrical rotation drive and radial electromagnetic bearing, which are to be found in the magnetic field of the stator (1) of radial electromagnetic bearing and simultaneously in the magnetic field of the stator (2) of electrical rotation drive and the system further comprises means for monitoring the position and/or speed and/or acceleration of rotation of the electromagnetic functional part (3) of radial electromagnetic bearing and electrical rotation drive and a control unit (7), which is connected with stabilizing electromagnets (11a, 11b, 11c, 11d) of the stator (1) of radial electromagnetic bearing, wherein each stabilizing electromagnet (11a, 11b, 11c, 11d) comprises a core (111a, 111b, 111c, 111d) around which there is wound up a stabilizing coil (110a, 110b, 110c, 110d), wherein the stabilizing electromagnets (11a, 11b, 11c, 11d) are equipped with common pole pieces (120a, 120b, 120c, 120d, 130a, 2130c) that are between the adjoining stabilizing electromagnets (11a, 11b, 11c, 11d) divided by spaces, and wherein the pole pieces (120a, 120b, 120c, 120d, 130a, 130c) on each stabilizing electromagnet (11a, 11b, 11c, 11d) cover at least a part of the core (111a, 111b, 111c, 111d) and a part of the winding of stabilizing coil (110a, 110b, 110c, 110d), **characterized by that** the cores (111a, 111b, 111c, 111d) of the stabilizing electromagnet (11a, 11b, 11c, 11d) of the stator (1) of the radial electromagnetic bearing are formed at least partly by stabilizing permanent magnets (1110a, 1110b, 1110c, 1110d), which are magnetized parallel with the axis (30) of the electromagnetic functional part (3) of the radial electromagnetic bearing and electrical rotation drive.

3. The electromagnetic bearing and driving system according to the claim 2, **characterized by that** the stator (1) of the radial electromagnetic bearing comprises an auxiliary annular stabilizing permanent magnet (113) mounted inside the space between the stabilizing coils (110a, 2110b, 110c, 110d) and magnetized parallel with the axis (30) of the electromagnetic functional part (3).

4. The electromagnetic bearing and driving system according to the claim 3, **characterized by that** to each stabilizing coil (110a-d) of the stator (1) of the radial electromagnetic bearing there is assigned an auxiliary stabilizing permanent magnet (114) magnetized parallel with the axis (30) of the electromagnetic functional part (3) of radial electromagnetic bearing and electrical rotation drive, while the auxiliary stabilizing permanent magnets (114) are mounted inside the space between the stabilizing coils (110a, 110b, 110c, 110d)..

5. The electromagnetic bearing and driving system according to any of the claims 2 to 4, **characterized by that** the pole pieces (120a, 120b, 120c, 120d) laying in one plane in the upper side of stabilizing electromagnets (11a, 11b, 11c, 11d) are in their part adjacent to the electromagnetic functional part (3) of radial electromagnetic bearing and electrical rotation drive connected by means of thin connecting bridges (1201) into an upper ferromagnetic plate (12) and pole pieces (130a, 130b, 130c, 130d) laying in one plane in the bottom side of stabilizing electromagnets (11a, 11b, 11c, 11d) are in their section adjacent to the electromagnetic functional part (3) of radial electromagnetic bearing and electrical rotation drive connected by means of thin connecting bridges (1301) into bottom ferromagnetic plate (13), wherein the stabilizing electromagnets (11a, 11b, 11c, 11d) of the stator (1) of radial electromagnetic bearing and the permanent magnets (1110a, 1110b, 1110c, 1110d, 113, 114) of the stator (1) of radial electromagnetic bearing are at least partially positioned between these upper and bottom ferromagnetic plates (12, 13), and wherein the spaces between the adjoining pole pieces (120a, 120b, 120c, 120d, 130a, 130b, 130c, 130d) in corresponding ferromagnetic plate (12, 13) are becoming broader outwards from the connecting bridges (1201, 1301).

6. The electromagnetic bearing and driving system according to the claim 5, **characterized by that** the side edges of adjoining poles pieces (120a, 120b, 120c, 120d, 130a, 130b, 130c, 130d) of ferromagnetic plate (12, 13) form an angle close to 90°.

7. The electromagnetic bearing and driving system according to any of the claims 2 to 6, **characterized by that** the electrical rotation drive is formed by an electrical motor or by an electrical machine functioning as motor and electrical generator.

8. The electromagnetic bearing and driving system according to any of the claims 2 to 7, **characterized by that** the stator (2) of electrical rotation drive is positioned inside the electromagnetic functional part (3), which is mounted inside the stator (1) of radial electromagnetic bearing.

9. The electromagnetic bearing and driving system according to the Claim 8, **characterized by that** the electromagnetic functional part is formed by a rotor (3), which comprises a ring-shaped carrying body (33) made of non-ferromagnetic material, on whose inner side there is placed at least one driving permanent magnet (31) and on its outer side there is a ferromagnetic ring (32).

10. The electromagnetic bearing and driving system according to any of the claims 2 to 7, **characterized by that** the stator (2) of electrical rotation drive is positioned against at least one face part of the electromagnetic functional part (3), which is mounted inside the stator (1) of the radial electromagnetic bearing.

11. The electromagnetic bearing and driving system according to any of the claims 2 to 10, **characterized by that** an application specific component (4) is mounted on the electromagnetic functional part (3) of radial electromagnetic bearing and electrical rotation drive in a co-axial manner.

12. The electromagnetic bearing and driving system according to the claim 11, **characterized by that** the application specific component is represented by a spinning rotor (4) of a rotor spinning machine.

13. The spinning mechanism of a rotor spinning machine comprising a spinning rotor (4), **characterized by that** the spinning rotor (4) is in a co-axial manner mounted on the electromagnetic functional part (3) of radial electromagnetic bearing and electrical rotation drive of the electromagnetic bearing and driving system according to any of the claims 2 to 10.

14. The spinning mechanism of the rotor spinning machine according to the claim 13, **characterized by that** the spinning rotor (4) is formed by a double-sided opened body, provided with an inlet aperture for entry of singled-out textile fibres and with an outlet aperture for draw -off the spun yarn, which is connected to the aperture created in the stator (2) of the electrical rotation drive wherein the draw-off yarn nozzle (5) is positioned in this aperture.

15. The spinning mechanism of the rotor spinning machine according to the claim 14, **characterized by that** the spinning rotor (4) has a vertical rotation axis, wherein the inlet aperture is positioned down, and the outlet aperture above.

16. The spinning mechanism of the rotor spinning machine according to the claim 13, **characterized by that** the spinning rotor (4) is formed by the rotation body with closed bottom, opposite to which there is created an aperture for inlet of singled-out textile fibres and draw -off the spun yarn.

## Patentansprüche

1. Verfahren zur Levitation, Zentrierung, Stabilisierung und Antrieb eines selbstständigen elektromagnetisch funktionsfähigen Teils (3) eines radialen elektromagnetischen Lagers und eines elektrischen Rotationsantriebs, der sich in Bezug auf Stator (1) des radialen elektromagnetischen Lagers und Stator (2) des elektrischen Rotationsantriebs durch die Wirkung der Komponenten des magnetischen Flusses bewegt und dreht, die aufgrund der Verfolgung der Lage und/oder der Geschwindigkeit und/oder der Beschleunigung der Drehung des elektromagnetisch funktionsfähigen Teils (3) des radialen elektromagnetischen Lagers und des elektrischen Rotationsantriebs die Kräfte hervorrufen, die auf den elektromagnetisch funktionsfähigen Teil (3) des radialen elektromagnetischen Lagers und des elektrischen Rotationsantriebs in der Axial- und/oder Radial- und/oder Tangentialrichtung wirken, wobei der magnetische Stabilisierungsfluss und der magnetische Antriebsfluss aus den getrennten Quellen (1, 2) des magnetischen Flusses gleichzeitig auf den elektromagnetisch funktionsfähigen Teil (3) des radialen elektromagnetischen Lagers und des elektrischen Rotationsantriebs wirken, der für das radiale elektromagnetische Lager und den elektrischen Rotationsantrieb gemeinsam ist, wobei der magnetische Stabilisierungsfluss eine permanente Komponente, die durch einen permanenten Stabilisierungsmagneten (1110a, 1110b, 1110c, 1110d) erregt wird, die zur Aufrechterhaltung des elektromagnetisch funktionsfähigen Teils (3) in der Axialarbeitslage in Bezug auf den Stator (1) des radialen elektromagnetischen Lagers und Stator (2) des elektrischen Rotationsantriebs wirkt, und eine veränderliche Komponente aufweist, die durch einen Stabilisierungselektromagneten (11a, 11b, 11c, 11d) erregt wird, die zur Stabilisierung der Arbeitslage des elektromagnetisch funktionsfähigen Teils (3) bei deren Ablenkung aus der Arbeitslage wirkt und wobei der magnetische Antriebsfluss, der durch den Antriebselektromagneten des Stators (2) des elektrischen Rotationsantriebs erregt wird, mindestens eine Tangentialkraft bildet, die die Rotationsbewegung des elektromagnetisch funktionsfähigen Teils (3) hervorruft, **dadurch gekennzeichnet, dass** die permanente Komponente des magnetischen Stabilisierungsflusses des radialen elektromagnetischen Lagers mit Hilfe von mindestens einem permanenten Stabilisierungsmagneten (1110a, 1110b, 1110c, 1110d) gebildet wird, der in den Kernen (111a, 111b, 111c, 111d) der Stabilisierungsspulen (110a, 110b, 110c, 110d) der Stabilisierungselektromagneten (11a, 11b, 11c, 11d) angeordnet ist.

2. Elektromagnetisches Lager- und Antriebssystem des radialen elektromagnetischen Lagers und des elektrischen Rotationsantriebs, das ein elektromagnetisches Lager zur aktiven Levitation und Zentrierung des elektromagnetisch funktionsfähigen Teils (3) des radialen elektromagnetischen Lagers und des elektrischen Rotationsantriebs aufweist, der im Stator (1, 2) des radialen elektromagnetischen Lagers und des elektrischen Rotationsantriebs im Raum zwischen Stator (1) des radialen elektromagnetischen Lagers und Stator (2) des elektrischen Rotationsantriebs beweglich und drehbar gelagert ist, wobei der elektromagnetisch funktionsfähige Teil (3) gemeinsame Teile des elektrischen Rotationsantriebs und des radialen elektromagnetischen Lagers aufweist, die sich in dem magnetischen Feld des Stators (1) des radialen elektromagnetischen Lagers und zugleich im magnetischen Feld des Stators (2) des elektrischen Rotationsantriebs befinden und das System weist ferner die Mittel zur Verfolgung der Lage und/oder Geschwindigkeit und/oder Beschleunigung der Drehung des elektromagnetisch funktionsfähigen Teils (3) des radialen elektromagnetischen Lagers und des elektrischen Rotationsantriebs und eine Steuereinheit (7) auf, die mit den Stabilisierungselektromagneten (11a, 11b, 11c, 11d) des Stators (1) des radialen elektromagnetischen Lagers gekoppelt ist, wobei jeder Stabilisierungselektromagnet (11a, 11b, 11c, 11d) einen Kern (111a, 111b, 111c, 111d) aufweist, um den herum eine Stabilisierungsspule (110a, 110b, 110c, 110d) aufgewickelt ist, wobei die Stabilisierungselektromagneten (11a, 11b, 11c, 11d) gemeinsame Polaufsätze (120a, 120b, 120c, 120d, 130a, 130c) aufweisen, die zwischen den benachbarten Stabilisierungselektromagneten (11a, 11b, 11c, 11d) durch Lücken getrennt sind, und wobei die Polaufsätze (120a, 120b, 120c, 120d, 130a, 130c) auf jedem Stabilisierungselektromagneten (11a, 11b, 11c, 11d) mindestens einen Teil des Kerns (111a, 111b, 111c, 111d) und einen Teil der Wicklung der Stabilisierungsspule (110a, 110b, 110c, 110d) abdecken, **dadurch gekennzeichnet, dass** die Kerne (111a, 111b, 111c, 111d) der Stabilisierungselektromagnete (11a, 11b, 11c, 11d) des Stators (1) des radialen elektromagnetischen Lagers mindestens zum Teil durch permanente Stabilisierungsmagnete (1110a, 1110b, 1110c, 1110d) gebildet sind, die parallel laufend mit der Achse (30) des elektromagnetisch funktionsfähigen Teils (3) des radialen elektromagnetischen Lagers und des elektrischen Rotationsantriebs magnetisiert sind.

3. Elektromagnetisches Lager- und Antriebssystem nach dem Anspruch 2, **dadurch gekennzeichnet, dass** der Stator (1) des radialen elektromagnetischen Lagers einen ringförmigen permanenten Hilfsstabilisierungsmagneten (113) aufweist, der in dem Raum zwischen den Stabilisierungsspulen (110a, 110b, 110c, 110d) gelagert ist und parallel laufend mit der Achse (30) des elektromagnetisch funktionsfähigen Teils (3) magnetisiert ist.

4. Elektromagnetisches Lager- und Antriebssystem nach dem Anspruch 3, **dadurch gekennzeichnet, dass** jeder Stabilisierungsspule (110a-d) des Stators (1) des radialen elektromagnetischen Lagers ein permanenter Hilfsstabilisierungsmagnet (114) zugeordnet ist, der parallel laufend mit der Achse (30) des elektromagnetisch funktionsfähigen Teils (3) des radialen elektromagnetischen Lagers und des elektrischen Rotationsantriebs magnetisiert ist, wobei die permanenten Hilfsstabilisierungsmagnete (114) im Raum zwischen den Stabilisierungsspulen (110a, 110b, 110c, 110d) gelagert sind.

5. Elektromagnetisches Lager- und Antriebssystem nach einem der Ansprüche 2 bis 4, **dadurch gekennzeichnet, dass** die Polaufsätze (120a, 120b, 120c, 120d), die in einer Ebene auf der oberen Seite der Stabilisierungselektromagnete (11a, 11b, 11c, 11d) liegen, in ihrem Teil, der auf elektromagnetisch funktionsfähigen Teil (3) des radialen elektromagnetischen Lagers und des elektrischen Rotationsantriebs aufliegt, mit Hilfe der dünnen Verbindungsbrücken (1201) in die obere ferromagnetische Platte (12) verbunden sind, und die Polaufsätze (130a, 130b, 130c, 130d), die in einer Ebene auf der unteren Seite der Stabilisierungselektromagnete (11a, 11b, 11c, 11d) liegen, in ihrem Teil, der auf elektromagnetisch funktionsfähigen Teil (3) aufliegt, mit Hilfe der dünnen Verbindungsbrücken (1301) in die untere ferromagnetische Platte (13) verbunden sind, wobei die Stabilisierungselektromagnete (11a, 11b, 11c, 11d) des Stators (1) des radialen elektromagnetischen Lagers und die permanenten Magnete (1110a, 1110b, 1110c, 1110d, 113, 114) des Stators (1) des radialen elektromagnetischen Lagers mindestens zum Teil zwischen der oberen und unteren ferromagnetischen Platte (12, 13) angebracht sind, wobei sich die Lücken zwischen den benachbarten Polaufsätzen (120a, 120b, 120c, 120d, 130a, 130b, 130c, 130d) in der jeweiligen ferromagnetischen Platte (12, 13) von den Verbindungsbrücken (1201, 1301) nach außen hin verbreiten.

6. Elektromagnetisches Lager- und Antriebssystem nach dem Anspruch 5, **dadurch gekennzeichnet, dass** die Seitenkanten der benachbarten Polaufsätze (120a, 120b, 120c, 120d, 130a, 130b, 130c, 130d) der ferromagnetischen Platte (12, 13) einen Winkel nah zu 90° einschließen.

7. Elektromagnetisches Lager- und Antriebssystem nach einem der Ansprüche 2 bis 6, **dadurch gekennzeichnet, dass** der elektrische Rotationsantrieb durch einen elektrischen Motor oder elektrische Maschine mit der Funktion eines Motors und eines elektrischen Generators gebildet wird.

8. Elektromagnetisches Lager- und Antriebssystem nach einem der Ansprüche 2 bis 7, **dadurch gekennzeichnet, dass** der Stator (2) des elektrischen Rotationsantriebes im elektromagnetisch funktionsfähigen Teil (3) angebracht ist, der im Stator (1) des radialen elektromagnetischen Lagers gelagert ist.

9. Elektromagnetisches Lager- und Antriebssystem nach dem Anspruch 8, **dadurch gekennzeichnet, dass** der elektromagnetisch funktionsfähige Teil durch einen Rotor (3) gebildet wird, der einen Tragkörper (33) einer ringförmigen Form aus einem nicht ferromagnetischen Material aufweist, auf dessen inneren Seite mindestens ein permanenter Antriebsmagnet (31) und auf der Außenseite ein ferromagnetischer Ring (32) gelagert sind.

10. Elektromagnetisches Lager- und Antriebssystem nach einem der Ansprüche 2 bis 7, **dadurch gekennzeichnet, dass** der Stator (2) des elektrischen Rotationsantriebs gegen mindestens einen Stirnteil des elektromagnetisch funktionsfähigen Teils (3) angebracht ist, der im Stator (1) des radialen elektromagnetischen Lagers gelagert ist.

11. Elektromagnetisches Lager- und Antriebssystem nach einem der Ansprüche 2 bis 10, **dadurch gekennzeichnet, dass** das technologische Arbeitsglied (4) auf dem elektromagnetisch funktionsfähigen Teil (3) des radialen elektromagnetischen Lagers und des elektrischen Rotationsantriebs koaxial gelagert ist.

12. Elektromagnetisches Lager- und Antriebssystem nach dem Anspruch 11, **dadurch gekennzeichnet, dass** das technologische Arbeitsglied durch einen Spinnrotor (4) einer Rotorspinnmaschine dargestellt wird.

13. Spinnvorrichtung einer Rotorspinnmaschine, die einen Spinnrotor aufweist, **dadurch gekennzeichnet, dass** der Spinnrotor (4) auf dem elektromagnetisch funktionsfähigen Teil (3) des radialen elektromagnetischen Lagers und des elektrischen Rotationsantriebs des elektromagnetischen Lager- und Antriebssystems nach einem der Ansprüche 2 bis 10 koaxial gelagert ist.

14. Spinnvorrichtung einer Rotorspinnmaschine nach dem Anspruch 13, **dadurch gekennzeichnet, dass** der Spinnrotor (4) durch beidseitig geöffneten Körper gebildet wird, der eine Eingangsöffnung zum Eingang von vereinzelten Textilfasern und eine Ausgangsöffnung zum Ausgang des ersponnenen Garns aufweist, an die die Öffnung anschließt, die im Stator (2) des elektrischen Rotationsantriebs gebildet wird, wobei in dieser Öffnung ein Garnabzugstrichter (5) gelagert ist.

15. Spinnvorrichtung einer Rotorspinnmaschine nach dem Anspruch 14, **dadurch gekennzeichnet, dass** der Spinnrotor (4) eine senkrechte Rotationsachse aufweist, wobei seine Eingangsöffnung unten und seine Ausgangsöffnung oben sind.

16. Spinnvorrichtung einer Rotorspinnmaschine nach dem Anspruch 13, **dadurch gekennzeichnet, dass** der Spinnrotor (4) durch einen Rotationskörper mit einem vollen Boden gebildet wird, gegen den eine Öffnung zum Eingang von vereinzelten Textilfasern und Ausgang des ersponnenen Garns gebildet ist.

## Revendications

1. Procédé de la lévitation, du centrage, de la stabilisation et de l'entraînement d'une partie séparée électromagnétiquement fonctionnelle (3) du palier électromagnétique radial et de l'entraînement rotatif électrique qui se déplace et tourne par rapport au stator (1) du palier électromagnétique radial et au stator (2) de l'entraînement rotatif électriqueau par l'action des composants du flux magnétique, qui sur la base de la surveillance de la position et/-ou de la vitesse et-/-ou de l'accélération de la rotation de la partie fonctionnelle électromagnétique (3) du palier électromagnétique radial et de l'entraînement rotatif électrique induisent les forces agissant sur la partie fonctionnelle électromagnétique (3) du palier électromagnétique radial et de l'entraînement rotatif électrique dans la direction axiale et/ou radiale et / ou tangentielle, tandis que le flux magnétique stabilisant et le flux magnétique d'entraînement provenant de sources distinctes (1, 2) du flux magnétique agit simultanément sur la partie fonctionnelle électromagnétique (3) du palier électromagnétique radial et de l'entraînement rotatif électrique qui est commune pour le palier électromagnétique radial et pour l'entraînement rotatif électrique tandis que le flux magnétique de stabilisation comprend la composante permanente excitée par l'aimant stabilisant permanent (1110a, 1110b, 1110c, 1110D), qui agit pour maintenir l'élément fonctionnel électromagnétique (3) dans la position axiale par rapport au stator (1) du palier électromagnétique radial et au stator (2) de l'entraînement rotatif électrique et la composante variable excitéé par l'électro-aimant de stabilisation (11a, 11b, 11c, 11d) qui agit pour stabiliser la position de travail de la partie fonctionnelle électromagnétique (3) lors de sa déflection de la position du travail et tandis que le flux magnétique d'entraînement, qui est excité par le solénoïde d'entraînement du stator (2) de l'entraînement rotatif électrique, génère au moins une force tangentielle induisant le mouvement de rotation de la partie fonctionnelle électromagnétique (3), **caractérisé en ce que** la composante permanente du flux magnétique de stabilisation du palier électromagnétique radial est formée par au moins un stabilisant aimant permanent (1110a, 1110b, 1110c, 1110D) disposé dans les noyaux (111a, 111b, 111c, 111d) des bobines de stabilisation (110a, 110b, 110c, 110d) des électro-aimants de stabilisation (11a , 11b, 11c, 11d).

2. Système électromagnétique de roulements et d'entraînements du palier électromagnétique radial et de l'entraînement rotatif électrique comprenant un palier électromagnétique pour la lévitation active et le centrage de la partie fonctionnelle électromagnétique (3) du palier électromagnétique radial et de l'entraînement rotatif électrique, qui est montée d'une manière mobile et rotative dans le stator (1, 2) du palier électromagnétique radial et de l'entraînement rotatif électrique dans l'espace entre le stator (1) du palier électromagnétique radial et le stator (2) de l'entraînement rotatif électrique, tandis que la partie fonctionnelle électromagnétique (3) comprend les parties communes pour l'entraînement rotatif électrique et pour le palier électromagnétique radial, qui sont situées dans le champ magnétique du stator (1) du palier électromagnétique radial et en même temps dans le champ magnétique du stator (2) de l'entraînement rotatif électrique et le système comprend en outre les moyens pour suivre la position et/ou la vitesse et/ou l'accélération de la rotation de la partie fonctionnelle électromagnétique (3) du palier électromagnétique radial et de l'entraînement rotatif électrique et l'unité de commande (7) qui est couplée avec les électro-aimants de stabilisation (11a, 11b, 11c, 11d) du stator (1) du palier électromagnétique radial, tandis que chaque électro-aimant de stabilisation (11a, 11b, 11c, 11d) comprend le noyau (111a, 111b, 111c, 111d) autour duquel est enroulée la bobine de stabilisation (110a, 110b, 110c, 110d), tandis que les électro-aimants de stabilisation (11a, 11b, 11c, 11d) sont équipés par les extensions polaires communes (120a, 120b, 120c, 120d, 130a, 130c) qui sont entre les électro-aimants voisins de stabilisation (11a, 11b, 11c, 11d) séparées par les espaces, et tandis que les extensions polaires (120a, 120b, 120c, 120d, 130a, 130c) couvrent sur chaque électro-aimant de stabilisation (11a, 11b, 11c, 11d) au moins une partie du noyau (111a, 111b, 111c, 111d) et une partie de l'enroulement de la bobine de stabilisation (110a, 110b, 110c, 110d), **caractérisé en ce que** les noyaux (111a, 111b, 111c, 111d) des électro-aimants de stabilisation (11a, 11b, 11c, 11d) du stator (1) du palier électromagnétique radial sont formés au moins en partie par les aimants permanents de stabilisation (1110a, 1110b, 1110c, 1110d) qui sont magnetisé parallèlement à l'axe (30) de la partie fonctionnelle électromagnétique (3) du palier électromagnétique radial et de l'entraînement rotatif électrique.

3. Système électromagnétique de roulements et d'entraînements selon la revendication 2, **caractérisé en ce que** le stator de palier électromagnétique radial (1) comprend l'aimant stabilisateur permanent annulaire auxiliaire (113) situé dans l'espace entre les bobines stabilisatrices (110a, 110b, 110c, 110d) et magnetisé parallèlement à l'axe (30) de la partie électromagnétiquement fonctionnelle (3).

4. Système électromagnétique de roulements et d'entraînements selon la revendication 3, **caractérisé en ce que** chaque bobine stabilisatrice (110a-d) du stator (1) du palier électromagnétique radial est associée à un aimant permanent stabilisateur auxiliaire (114) magnétisé parallèlement à l'axe (30) de la partie électromagnétiquement fonctionnelle (3) du palier électromagnétique radial et de l'entraînement rotatif électrique, tandis que les aimants permanents stabilisateurs auxiliaires (114) sont situés dans l'espace entre les bobines de stabilisation (110a, 110b, 110c, 110d).

5. Système électromagnétique de roulements et d'entraînements selon la revendication 3, **caractérisé en ce que** les extensions polaires (120a, 120b, 120c, 120d) se trouvant dans un même plan sur le côté supérieur des électro-aimants de stabilisation (11a, 11b, 11c, 11d) sont dans leur partie adjacente à la partie fonctionnelle électromagnétique (3) du palier électromagnétique radial et de l'entraînement rotatif électrique connectées au moyen des petits ponts minces de connexion (1201) dans la plaque ferromagnétique supérieure (12) et des extensions polaires (130a, 130b, 130c, 130d) se trouvant dans un même plan sur le côté inférieur des électro-aimants de stabilisation (11a, 11b, 11c, 11d) sont dans leur partie adjacente à la partie fonctionnelle électromagnétique (3) reliées par des petits ponts minces de connexion (1301) dans la plaque ferromagnétique inférieure (13), tandis que les électro-aimants de stabilisation (11a, 11b, 11c, 11d) du stator (1) du palier électromagnétique radial et les aimants permanents (1110a, 1110b, 1110c, 1110D, 113, 114) du stator (1) du palier électromagnétique radial sont au moins partiellement disposés entre les plaques ferromagnétiques supérieure et inférieure (12, 13), tandis que les espaces entre les extensions polaires voisines (120a, 120b, 120c, 120d, 130a, 130b, 130c, 130d) dans la plaque ferromagnétique correspondante (12, 13) s'étendent vers l'extérieur à partir des petits ponts minces de connexion (1201, 1301).

6. Système électromagnétique de roulements et d'entraînements selon la revendication 5, **caractérisé en ce que** les bords latéraux des extensions polaires adjacentes (120a, 120b, 120c, 120d, 130a, 130b, 130c, 130d) de la plaque ferromagnétique (12, 13) font un angle proche de 90 °.

7. Système électromagnétique de roulements et d'entraînements selon l'une quelconque des revendications 2 à 6, **caractérisé en ce que** l'entraînement rotatif électrique consiste en un moteur électrique ou en une machine électrique avec la fonction du moteur et du générateur électrique.

8. Système électromagnétique de roulements et d'entraînements selon l'une quelconque des revendications 2 à 7, **caractérisé en ce que** le stator (2) de l'entraînement rotatif électrique est situé dans la partie électromagnétique fonctionnelle (3) qui est située à l'intérieur du stator (1) du palier électromagnétique radial.

9. Système électromagnétique de roulements et d'entraînements selon la revendication 8, **caractérisé en ce que** la partie électromagnétiquement fonctionnelle est formée par le rotor (3) qui comprend le corps de porteur (33) en forme annulaire en matériau non ferromagnétique, à l'intérieur duquel il y a au moins un aimant permanent de commande (31) et à son extérieur la bague ferromagnétique (32).

10. Système électromagnétique de roulements et d'entraînements selon l'une quelconque des revendications 2 à 7, **caractérisé en ce que** le stator (2) de l'entraînement électrique rotatif est situé contre au moins une partie avant de la partie électromagnétiquement fonctionnelle (3) qui est placée dans l'intérieur du stator (1) du palier électromagnétique radial.

11. Système électromagnétique de roulements et d'entraînements selon l'une quelconque des revendications 2 à 10, **caractérisé en ce que** le membre de travail technologique (4) est monté coaxialement sur la partie électromagnétiquement fonctionnelle (3) du palier électromagnétique radial et de l'entraînement rotatif électrique.

12. Système électromagnétique de roulements et d'entraînements selon la revendication 11, **caractérisé en ce que** le membre de travail technologique est représenté par un rotor de filage (4) de la machine à filer à rotor.

13. Dispositif de filage de la machine à filer à rotor comprenant un rotor de filage, **caractérisé en ce que** le rotor de filage (4) est posé coaxialement sur la partie électromagnétiquement fonctionnelle (3) du palier électromagnétique radial et de l'entraînement rotatif électrique du système électromagnétique de roulements et d'entraînements selon l'une quelconque des revendications 2 à 10.

14. Dispositif de filage de la machine à filer à rotor selon la revendication 13, **caractérisé en ce que** le rotor de filage (4) est formé par le corps ouvert bilatéralement qui est pourvu d'une ouverture d'entrée pour les fibres textiles unifiés et d'une sortie du fil sortant à la quelle le trou formé dans le stator (2) de l'entraînement rotatif électrique est relié, tandis que dans ce trou un entonnoir de sortie de fil est logé.(5).

15. Dispositif de filage de la machine à filer à rotor selon la revendication 14, **caractérisé en ce que** le rotor de filage (4) présente un axe de rotation vertical, tandis que son ouverture d'entrée il y a vers le bas et l'ouverture de sortie vers le haut.

16. Dispositif de filage de la machine à filer à rotor selon la revendication 13, **caractérisé en ce que** le rotor de filage (4) est formé par le corps rotatif avec un fond complet contre lequel il y a une ouverture pour l'entrée des fibres textiles unifiées et pour la sortie du filé.
